# DEMANDE DE BREVET EUROPEEN

(11) **EP 1 220 436 A2**
(43) Date de publication de la demande: **03.07.2002**
(21) Numéro de dépôt: 01403315.3
(22) Date de dépôt: 20.12.2001
(51) Int. Cl.: H02M 5/293

(54) **Appareil muni d'un dispositif électronique de commande d'une charge et d'une unité d'alimentation de ce dispositif**

(30) Priorité: 20.12.2000 FR 0016689
(71) Demandeur: LEGRAND, 87045 Limoges (FR)
(72) Inventeur: Leblanc, Didier, 87100 Limoges (FR); Suchaud, Nicolas, 87000 Limoges (FR)
(74) Mandataire: Lepelletier-Beaufond, François

(57) **Abrégé**

1. Appareil de commande d'une charge (2) électrique alimentée en courant alternatif, comportant:
- un moyen de coupure (5) pour opérer sélectivement l'allumage et l'extinction de la charge (2),
- un dispositif électronique de commande (7) du moyen de coupure (5), et
- une unité (9) d'alimentation en courant continu du dispositif électronique de commande (7), présentant un condensateur réservoir d'énergie (40) et des moyens de pilotage de la charge dudit condensateur (40) adaptés à limiter la tension de charge du condensateur (40) en deçà d'un niveau plafond,
caractérisé en ce que les moyens de pilotage comportent, d'une part, un organe interrupteur (34) admettant un état conducteur pour permettre le passage d'un courant de charge du condensateur (40) et admettant un état bloqué pour interdire le passage du courant de charge du condensateur (40), et comportent, d'autre part, un moyen de blocage (46) pour commander l'état conducteur ou l'état bloqué dudit organe interrupteur, en fonction de la tension de charge dudit condensateur (40).

## Description

L'invention concerne les appareils de commande d'une charge électrique alimentée en courant alternatif et plus particulièrement les appareils de ce type comportant un dispositif électronique de commande de la charge, lequel dispositif doit être alimenté en courant continu.

Des appareils équipés d'un tel dispositif électronique de commande sont par exemple des variateurs, des interrupteurs commandés par un détecteur infrarouge, des interrupteurs commandés par un récepteur radio ou des interrupteurs commandés par un récepteur de signaux par courant porteur.

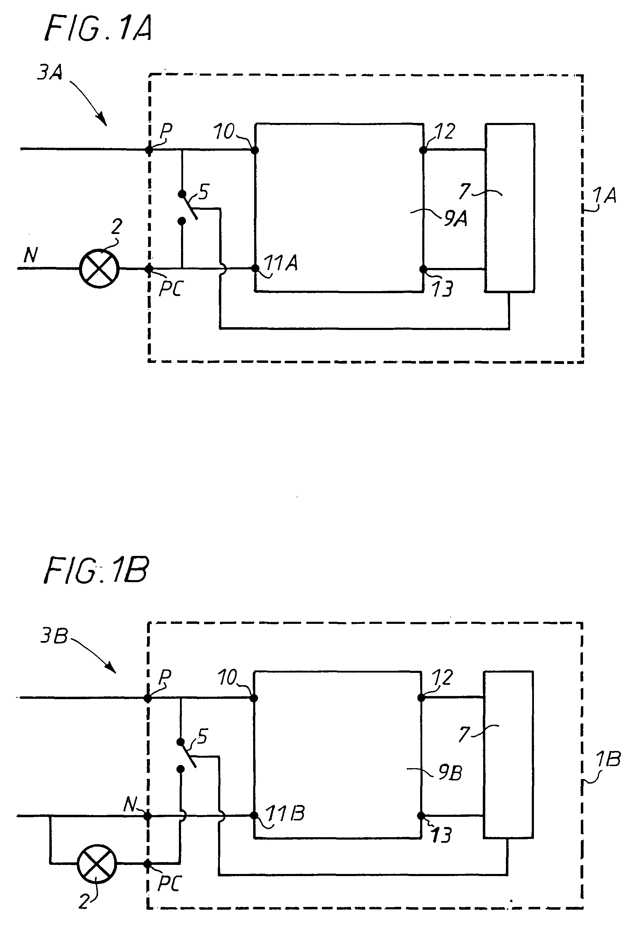

En général, ces appareils de commande d'une charge sont installés suivant l'un ou l'autre d'un montage dit deux fils (figure 1A) ou d'un montage dit trois fils (figure 1B). Ils comportent une unité 9A ou 9B assurant l'alimentation en courant continu du dispositif électronique de commande 7 qui pilote l'état de conduction d'un moyen de coupure 5 apte à commander le fonctionnement d'une lampe 2, qui constitue la charge.

Le dispositif de commande 7 est un appareil électronique parfois qualifié d'intelligent, apte à identifier des ordres émis par une interface de commande non représentée, par exemple un bouton actionné par un utilisateur pour commander la mise en marche ou l'arrêt d'un variateur et le réglage du taux de variation.

Selon le montage 3A dit deux fils de la figure 1A, l'appareil 1A comporte une borne de connexion P à la phase et une borne de connexion PC au neutre via la charge 2. L'unité d'alimentation 9A du dispositif de commande 7 comporte deux entrées dont l'une 10 est reliée à la borne P et l'autre 11A est reliée à la borne PC. L'unité d'alimentation 9A comporte deux sorties 12 et 13 reliées aux bornes d'alimentation du dispositif de commande 7. Le moyen de coupure 5 est branché entre la borne P et la borne PC, en parallèle de l'unité d'alimentation 9A.

Selon le montage 3B dit trois fils de la figure 1B, l'appareil 1B comporte une borne de connexion P à la phase et deux bornes de connexion N, PC au neutre. L'une N des deux bornes de connexion au neutre y est reliée directement et l'autre PC y est reliée via la lampe 2. L'unité d'alimentation 9B comporte deux entrées dont l'une 10 est reliée à la borne de connexion P et l'autre 11B est reliée à la borne de connexion N. Le moyen de coupure 5 est branché entre la borne de connexion P et la borne de connexion PC.

Dans les montages dits trois fils, l'unité d'alimentation 9B est reliée à la source de courant alternatif indépendamment de la charge.

En revanche, dans les montages dits deux fils (figure 1A), l'unité d'alimentation 9A est en série avec la charge quand le moyen de coupure est ouvert, alors qu'elle est en parallèle avec le moyen de coupure quand celui-ci est fermé (partie d'alternance où la charge est alimentée). Par conséquent, s'il existe une tension disponible aux bornes 10 et 11A de l'unité 9A quand le moyen de coupure est ouvert, il n'y en a plus quand le moyen de coupure est fermé. Ainsi, lorsque l'état passant du moyen de coupure est commandé selon l'un ou l'autre de deux modes de commande dits par "ouverture de phase" ou par "fermeture de phase", l'intervalle disponible pendant lequel il existe une tension aux bornes 10 et 11A de l'unité d'alimentation 9A se situe alors respectivement en fin et en début d'alternance de la tension alternative.

L'unité d'alimentation 9A ou 9B délivre une basse tension de quelques Volts et une puissance d'un ordre de grandeur sensiblement inférieur à la puissance délivrée à la charge.

La basse tension élaborée dans l'unité d'alimentation 9A ou 9B est classiquement disponible aux bornes d'un condensateur réservoir chargé pendant une fraction d'alternance de la tension alternative. La charge du condensateur réservoir est plafonnée par un moyen limiteur tel qu'une diode Zener.

Dans un exemple de réalisation d'une unité d'alimentation décrit dans le document WO9820604, le moyen limiteur est un montage à transistors qui réduit le courant de charge.

De façon générale, dans les unités d'alimentation connues à ce jour, il y a des risques de problèmes de dissipation thermique qui rendent difficile l'installation de tels appareils dans des boîtes d'encastrement où le confinement restreint l'évacuation de la chaleur, et ceci de façon plus aiguë quand l'appareil est installé selon un montage dit deux fils.

Un autre problème est qu'il faut prévoir une unité d'alimentation adaptée pour chaque type d'installation (deux ou trois fils) et pour chaque amplitude de tension alternative.

L'invention a pour objectif de remédier à ces problèmes.

Elle propose à cet effet un appareil de commande d'une charge électrique alimentée en courant alternatif, comportant
- un moyen de coupure pour opérer sélectivement l'allumage et l'extinction de la charge,
- un dispositif électronique de commande du moyen de coupure, et
- une unité d'alimentation en courant continu du dispositif électronique de commande, présentant un condensateur réservoir d'énergie et des moyens de pilotage de la charge dudit condensateur adaptés à limiter la tension de charge du condensateur en deçà d'un niveau plafond,
caractérisé en ce que les moyens de pilotage comportent, d'une part, un organe interrupteur admettant un état conducteur pour permettre le passage d'un courant de charge du condensateur et admettant un état bloqué pour interdire le passage du courant de charge du condensateur, et comportent, d'autre part, un moyen de blocage pour commander l'état conducteur ou l'état bloqué dudit organe interrupteur, en fonction de la tension de charge dudit condensateur.

On observera que dans les appareils antérieurs susmentionnés, le moyen limiteur de tension ne supprime pas le courant de charge lorqu'est atteinte la tension plafond du condensateur.

L'interruption de la conduction de l'organe interrupteur que propose l'invention permet de limiter l'échauffement, au bénéfice des possibilités d'installation d'un appareil de commande selon l'invention dans une boîte d'encastrement.

Au surplus, le faible échauffement rend possible l'emploi d'une même unité d'alimentation aussi bien dans un appareil destiné à être installé selon un montage dit deux fils que dans un appareil destiné à être installé selon un montage dit trois fils, et ceci bien que dans ce dernier cas l'on dispose en permanence de la tension alternative à pleine amplitude.

Dans un premier mode de réalisation préféré, l'organe interrupteur est un transistor ayant un canal principal en série avec le circuit de charge du condensateur et le moyen de blocage est un thyristor dont l'anode est reliée à l'électrode de commande de l'organe interrupteur et la gâchette est portée à un potentiel représentatif de la tension de charge du condensateur.

Dans un deuxième mode de réalisation préféré, l'organe interrupteur est un transistor ayant un canal principal en série avec le circuit de charge du condensateur et le moyen de blocage est un thyristor dont l'anode est reliée à l'électrode de commande de l'organe interrupteur et la gâchette est portée à un potentiel représentatif tant de la tension de charge du condensateur que de la tension alternative appliquée à l'entrée de l'unité d'alimentation.

Dans un troisième mode de réalisation préféré, l'organe interrupteur est un transistor ayant un canal principal en série avec le circuit de charge du condensateur et le moyen de blocage comporte deux transistors, un premier transistor asservi à la tension de charge du condensateur et un deuxième transistor asservi à la tension alternative appliquée à l'entrée de l'unité d'alimentation.

Selon une disposition avantageuse, le premier transistor asservi à la tension de charge du condensateur est un transistor bipolaire.

Selon une autre disposition avantageuse, le deuxième transistor asservi à la tension alternative appliquée à l'entrée de l'unité d'alimentation est un transistor à effet de champ.

Avantageusement, dans chacun des modes de réalisation, l'organe interrupteur est un transistor de puissance, et notamment un transistor à effet de champ semi-oxyde métal (FETMOS) ou un transistor bipolaire à grille isolée (IGBT).

D'autres caractéristiques et avantages de la présente invention ressortiront de la description d'exemples préférés de réalisation qui va suivre, à titre illustratif et non limitatif, en référence aux figures 2, 3 et 4 des dessins annexés :
- la figure 2 est un schéma d'un mode de réalisation d'un appareil selon l'invention installé selon le montage de la figure 1A,
- la figure 3 est un schéma d'une première variante de l'unité d'alimentation de cet appareil, et
- la figure 4 est un schéma d'une deuxième variante de cette unité d'alimentation.

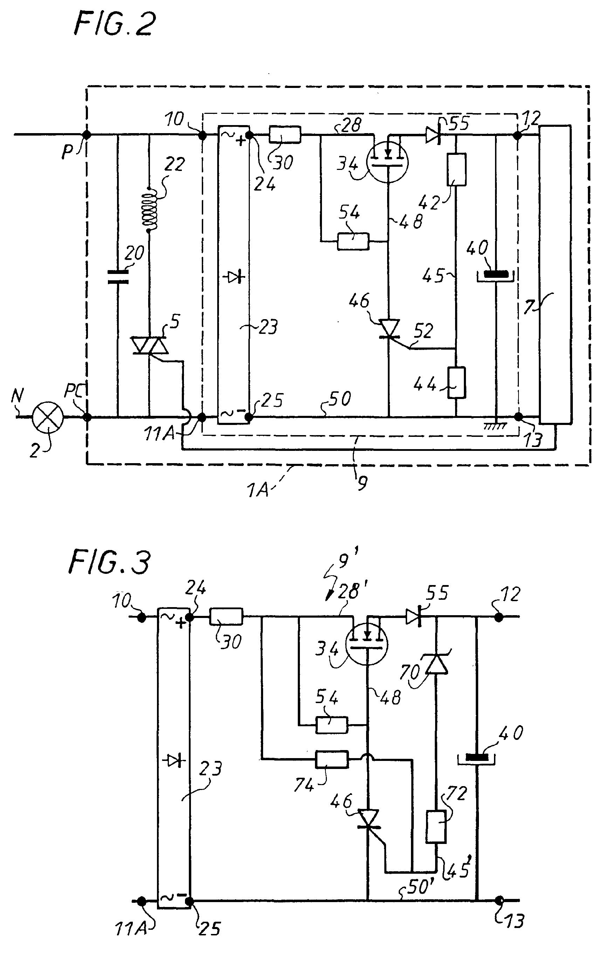

Dans l'appareil illustré sur la figure 2, le moyen de coupure 5 est un triac de puissance dont la gâchette est commandée par le dispositif électronique de commande 7. De manière usuelle, pour éviter les perturbations électromagnétiques, un condensateur 20 est monté en parallèle du triac 5 et une bobine 22 est montée en série avec celui-ci.

De manière classique, l'unité d'alimentation 9 comporte une unité de redressement 23 par pont de diodes transformant la tension alternative présente aux entrées 10 et 11A en une tension redressée double alternance délivrée en deux points 24 et 25.

Un condensateur réservoir 40 est branché entre des sorties 12 et 13 de l'unité d'alimentation 9.

Sur une ligne 28 allant du point 24 à la sortie 12, l'unité d'alimentation 9 comporte en série une résistance 30 de limitation de courant et un organe interrupteur 34, en l'espèce un transistor à effet de champ semi-conducteur oxyde métal (FETMOS) avec une grille 48. Un pont de résistances 42 et 44 branché en parallèle du condensateur 40 forme une branche 45 entre la ligne 28 et une ligne 50 reliant le point 25 et la sortie 13. Un moyen de blocage 46, en l'espèce un thyristor, est branché entre la grille 48 du transistor 34 et la ligne 50. La gâchette 52 du moyen de blocage 46, est reliée à la branche 45 entre les résistances 42 et 44. Une résistance 54 est branchée entre drain et grille 48 du transistor 34. Une diode 55 est branchée sur la ligne 28, entre la source du transistor 34 et la branche 45.

On va maintenant considérer le fonctionnement de l'appareil 1A représenté à la figure 2.

L'appareil 1A comporte deux modes de fonctionnement, l'un dit de marche et l'autre dit d'arrêt.

En mode dit d'arrêt, le triac de puissance 5 est non passant et la lampe 2 est simplement traversée par le courant passant dans l'unité d'alimentation 9, dans un état dit d'extinction.

En mode dit de marche, le dispositif de commande 7 commande le triac 5 par fermeture de phase. Pendant la première partie de chaque alternance de la tension alternative où le triac de puissance 5 reste non passant, la lampe 2 est simplement traversée par le courant passant dans l'unité d'alimentation 9. Pendant le reste de l'alternance de la tension alternative où le triac de puissance 5 est rendu passant, la lampe 2 est alimentée dans un état dit d'allumage.

Quel que soit le mode de fonctionnement de l'appareil 1A, l'unité d'alimentation 9 présente deux phases de fonctionnement, une première phase dite de charge et une deuxième phase dite d'attente.

A l'instant de mise sous tension de l'appareil 1A, le condensateur 40 n'est pas chargé. Le transistor 34 est non passant mais un courant de fuite circule entre son drain et sa source dès l'instant de mise sous tension. Le transistor 34 tend à commuter à l'état passant quand la tension entre les points 24 et 25 augmente. Au début de l'alternance de la tension alternative, la tension entre les points 24 et 25 est insuffisante pour que le transistor 34 passe à l'état passant compte tenu notamment de la chute de tension dans la résistance 30. La conduction du transistor 34 intervient ainsi un certain temps après le zéro de la tension, à l'instant où la tension entre les points 24 et 25 est suffisante pour que la tension présente entre grille 48 et source du transistor 34 permette sa conduction. La phase dite de charge du condensateur 40 commence, le courant de charge du condensateur passant dans le canal principal drain source du transistor série 34. La résistance 42 et la résistance 44 forment un pont diviseur de la tension présente aux bornes du condensateur 40.

Le condensateur 40 est considéré comme chargé quand la tension à ses bornes atteint un niveau plafond représentatif de la charge désirée pour disposer de suffisamment d'énergie pour alimenter le dispositif de commande 7 au moins pendant la phase dite d'attente, à savoir pendant un intervalle de temps à la fin duquel la tension aux bornes du condensateur 40 tombe à une valeur correspondant à la valeur de tension minimale d'alimentation du dispositif électronique de commande 7. Quand le condensateur 40 est considéré comme chargé, la tension présente aux bornes de la résistance 44 du pont diviseur de tension atteint une fraction dudit niveau plafond suffisante pour amorcer le thyristor 46.

Le passage à l'état passant du thyristor 46 fait suffisamment chuter la tension entre la grille 48 et la source du transistor 34 pour que ce dernier devienne non passant. La charge du condensateur 40 est alors interrompue. La phase dite de charge est terminée et une phase dite d'attente débute. Le condensateur réservoir 40 commence à se décharger pour alimenter le dispositif électronique de commande 7.

Le thyristor 46 reste à l'état passant jusqu'au passage à zéro suivant du courant alternatif marquant la fin de l'alternance en cours du courant alternatif.

En début d'une nouvelle alternance de la tension alternative, la transistor 34 redevient passant dès que la tension entre les points 24 et 25 est suffisante, la phase dite d'attente prenant fin. Une nouvelle phase dite de charge débute.

A chaque alternance de la tension alternative ultérieure à la première alternance intervenue à la mise sous tension de l'appareil 1A, il y a une phase dite de charge où le thyristor 46 est non passant et le transistor 34 est passant, suivie d'une phase dite d'attente intervenant dès que la conduction thyristor 46 est amorcée quand la tension aux bornes du condensateur réservoir 40 atteint le niveau plafond.

En mode dit de marche, le dispositif électronique de commande 7 commande l'amorçage du triac 5 pendant la phase dite d'attente.

Si la lampe 2 a un comportement de type capacitif, le passage à zéro de courant intervient avant le passage à zéro de tension, pendant la phase dite d'attente.

La variante d'unité d'alimentation 9' illustrée à la figure 3 diffère de l'exemple de réalisation illustré à la figure 2 par les moyens d'amorçage du thyristor 46. Le pont diviseur de tension de la ligne 45 de l'unité d'alimentation 9 est remplacé dans l'unité d'alimentation 9' par une ligne 45' comportant une diode zener 70 reliée à la source du transistor 34 sur la ligne 28' en amont du condensateur 40 et à une résistance série 72 reliée d'une part à la gâchette du thyristor 46 et d'autre part à une résistance 74 reliée à la ligne 28' en amont du transistor 34.

Comme dans le cas de l'unité d'alimentation 9 illustrée à la figure 2, l'amorçage du thyristor 46 de l'unité d'alimentation 9' intervient quand la tension aux bornes du condensateur 40 a atteint le niveau plafond, la tension aux bornes de la diode zener 70 devenant alors suffisante pour que cette dernière soit passante et que le courant passant dans la ligne 45' permette, l'amorçage du thyristor 46, mais ici, en fonction de la valeur de la résistance 74, le thyristor 46 peut aussi être amorcé quand la tension entre les points 24 et 25 atteint un certain seuil correspondant à une valeur déterminée de la valeur absolue instantanée de la tension alternative appliqué à l'entrée de l'unité d'alimentation 9'. On prolonge ainsi la phase dite d'attente pendant toute la partie d'alternance où la tension entre les points 24 et 25 dépasse ledit certain seuil. On crée ainsi un moyen supplémentaire de protection contre l'échauffement.

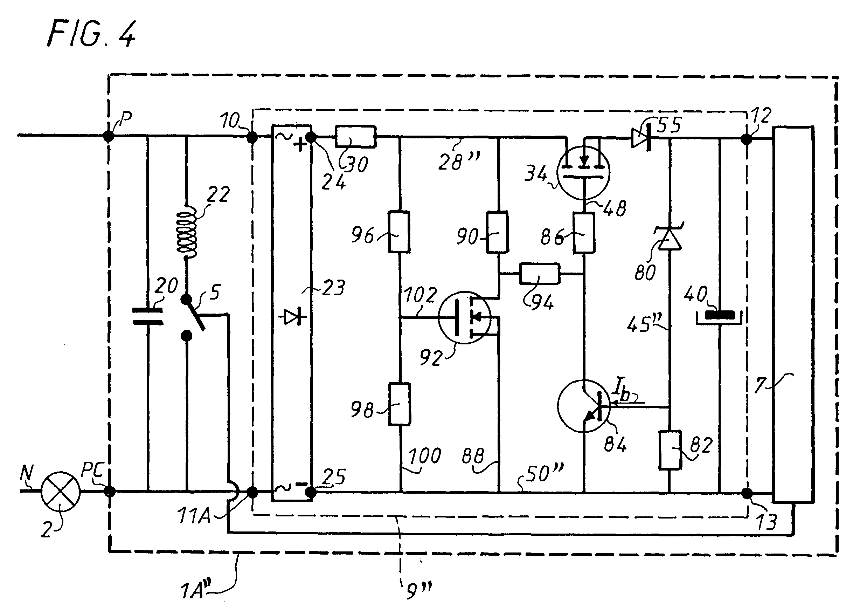

La variante de l'unité d'alimentation 9" illustrée à la figure 4 diffère du mode de réalisation illustré à la figure 2 par les moyens de pilotage de la charge du condensateur réservoir 40, en particulier par les moyens de commande de la commutation du transistor série 34.

Une branche 45" branchée en parallèle du condensateur réservoir 40 comporte une diode zener 80 et une résistance 82. Un transistor bipolaire 84 formant ici moyen de blocage du transistor 34 est branché par son collecteur à une résistance 86 reliée à la grille 48 du transistor 34 et par son émetteur à la ligne 50". La base du transistor 84 est reliée à la branche 45" entre la diode zener 80 et la résistance 82. Une résistance 90 et un transistor MOSFET 92 formant moyen de blocage du transistor 34 sont branchés sur une ligne 88 reliant la ligne 28" et la ligne 50" en amont du transistor 34. Une résistance 94 est reliée d'une part à la jonction de la résistance 90 au drain du transistor 92 et d'autre part à la jonction de la résistance 86 au collecteur du transistor 84. Une résistance 96 et une résistance 98 forment un pont diviseur 100 entre les lignes 28" et 50" en amont de la ligne 88. La grille 102 du transistor 92 est reliée au pont diviseur 100 entre la résistance 96 et la résistance 98.

On va maintenant considérer le fonctionnement de la variante de l'appareil 1A" illustrée à la figure 4.

Dans l'unité d'alimentation 9", la commande de commutation à l'état non passant du transistor série 34 quand le condensateur 40 est chargé s'effectue de manière différente de la commande de commutation du transistor 34 de l'unité d'alimentation 9 représentée à la figure 2.

En mode dit d'arrêt de l'appareil 1A", à la mise sous tension, le transistor 34 est passant au début de l'alternance de la tension alternative lors d'une phase dite de charge, dès que la tension entre les points 24 et 25 est suffisante. Le condensateur réservoir 40 est en charge.

Quand la tension aux bornes du condensateur 40 se rapproche d'un niveau plafond voulu supérieur à la tension de conduction de la diode zener 80, la conduction de cette dernière induit la présence d'un courant de base Ib qui tend à rendre le transistor 84 conducteur, ce qui tend à rendre le transistor 34 non passant et à pincer le courant de charge dans celui-ci. La charge du condensateur 40 est ralentie mais la tension aux bornes de ce dernier continue d'augmenter et le courant de charge s'amenuise au fur et à mesure que le pincement augmente. Quand la tension aux bornes du condensateur 40 atteint le niveau plafond, le transistor 84 est à l'état passant et le transistor 34 est à l'état non passant. Le condensateur 40 commence a se décharger. Le courant Ib baisse. Il y a à nouveau pincement du courant de charge. La tension aux bornes du condensateur 40 est maintenue au niveau plafond par stabilisation du pincement du courant de charge et équilibre des transistors 84 et 34 dans un régime dit linéaire intermédiaire entre leur état bloqué (non passant) et leur état passant. Le régime dit linéaire dure suffisamment peu de temps pour que les transistors 34 et 84 n'aient pas le temps de chauffer.

La charge du condensateur réservoir 40 et le régime dit linéaire des transistors 34 et 84 prennent fin quand le transistor 92 est passant, c'est à dire quand la tension aux bornes de la résistance 98 est suffisante pour permettre la conduction du transistor 92, la tension aux bornes de la résistance 98 étant proportionnelle à la tension aux bornes de la branche 100, laquelle est fonction de la valeur absolue de la tension instantanée présente entre les entrées 10 et 11A. Le transistor 92 est passant quand la tension entre les points 24 et 25 est supérieure à un premier seuil.

En fin d'alternance de la tension alternative, quand la tension entre les points 24 et 25 devient inférieure au premier seuil, le transistor 92 commute à l'état non passant.

Le condensateur 40 ayant fourni de l'énergie au dispositif de commande 7 pendant que le transistor 92 était passant, la tension à ses bornes est inférieure au niveau plafond. Le transistor 84 est donc non passant et le transistor 34 est passant. La phase dite d'attente prend fin et une phase dite de charge débute.

Le condensateur 40 est en charge jusqu'à ce que la tension à ses bornes atteigne le niveau plafond. La phase dite de charge prend fin et une phase dite d'attente débute à nouveau.

Il y a à nouveau un régime linéaire des transistors 34 et 84 qui se termine à la fin de l'alternance courante.

En début de nouvelle alternance, dès que la tension entre les points 24 et 25 est suffisante, le transistor 34 est passant. La phase dite d'attente prend fin et une phase dite de charge débute.

Le transistor 34 reste passant jusqu'à ce que la tension aux bornes du condensateur 40 atteigne le niveau plafond. La phase dite de charge prend fin et une phase dite d'attente débute à nouveau.

Il y a à nouveau un régime linéaire des transistors 34 et 84 se terminant quand la tension entre les points 24 et 25 atteint le premier seuil, quand le transistor 92 devient passant.

Le transistor 92 reste passant jusqu'à ce que la tension entre les points 24 et 25 atteigne à nouveau le premier seuil.

Une nouvelle phase dite de charge débute, suivie d'une nouvelle phase dite d'attente. Le cycle des phases dites de charge et d'attente continue suivant le même principe pendant les alternances ultérieures.

En résumé, le transistor 34 ne peut être passant pour autoriser la charge du condensateur 40 que quand la tension aux bornes de ce dernier est inférieure au niveau plafond, quand la tension entre les points 24 et 25 est inférieure au premier seuil. Il y a une phase dite de charge quand le transistor série 34 est passant.

En mode de fonctionnement dit de marche, comme vu précédemment pour le mode de réalisation représenté à la figure 2, l'unité d'alimentation 9" n'est pas alimentée quand le moyen de coupure 5 est à l'état passant. Les cycles de phases dites de charge et d'attente ne peuvent intervenir qu'à l'état non passant du moyen de coupure 5.

Trois types de commande du moyen de coupure 5 peuvent se présenter si le moyen de coupure 5 peut être commandé à la fermeture comme à l'ouverture.

Dans le premier cas, le moyen de coupure 5 est commandé à l'état passant en mode "ouverture de phase". Sous l'action du dispositif électronique de commande 7, le moyen de coupure 5 est commuté à l'état passant dès le passage à zéro de la tension alternative et reste passant pendant un délai prédéterminé programmé dans le dispositif de commande 7, jusqu'à un instant de la deuxième moitié d'alternance où la tension entre les points 24 et 25 atteint un deuxième seuil supérieur au premier seuil.

L'unité d'alimentation 9" est alimentée en fin d'alternance de la tension alternative. Le transistor 34 est passant tant que la tension aux bornes du condensateur 40 est inférieure au niveau plafond et tant que la tension entre les points 24 et 25 est inférieure au premier seuil.

Dans le deuxième cas le moyen de coupure 5 est commandé à l'état passant en mode "fermeture de phase". Sous l'action du dispositif électronique de commande 7, le moyen de coupure 5 n'est commuté à l'état passant qu'après un délai prédéterminé programmé dans le dispositif de commande 7 ultérieur au passage à zéro du courant alternatif, à un instant de la première moitié d'alternance où la tension entre les points 24 et 25 atteint le deuxième seuil.

L'unité d'alimentation 9" est alimentée en début d'alternance de la tension alternative. Le transistor 34 est passant tant que la tension aux bornes du condensateur 40 est inférieure au niveau plafond et tant que la tension entre les points 24 et 25 est inférieure au premier seuil.

Dans le troisième cas, le moyen de coupure 5 est passant pendant une partie médiane de chaque alternance de la tension alternative. Sous l'action du dispositif électronique de commande 7, le moyen de coupure 5 n'est commuté à l'état passant qu'après un délai prédéterminé ultérieur au passage à zéro de la tension alternative à un instant où la tension entre les points 24 et 25 est égale au deuxième seuil. Il reste à l'état passant pendant un délai déterminé mémorisé dans le dispositif de commande 7 tel que sa commutation à l'état non passant s'effectue avant le passage à zéro de la tension alternative marquant la fin de l'alternance en cours, à un instant où la tension entre les points 24 et 25 est égale au deuxième seuil.

L'unité d'alimentation 9" est alimentée en début et en fin d'alternance. Le transistor 34 est passant en début d'alternance (quand la tension entre les points 24 et 25 est suffisante) et en fin d'alternance tant que la tension aux bornes du condensateur 40 est inférieure au niveau plafond et tant que la tension entre les points 24 et 25 est inférieure au premier seuil.

Les délais vus ci-dessus et les premier et deuxième seuils doivent être choisis de telle manière que l'unité d'alimentation puisse fonctionner en raccordant ses entrées à une source de tension alternative de 110 Volts ou 220 Volts.

Chaque mode de réalisation de l'unité d'alimentation a été décrit installé selon un montage dit deux fils. On observera qu'ils sont chacun compatibles avec un montage dit trois fils (point 11A des unités 9, 9' et 9" remplacé par un point 11B directement relié au neutre), le fonctionnement de l'unité d'alimentation étant alors indépendant du mode de marche ou d'arrêt du moyen de coupure 5, la totalité de chaque alternance étant disponible aux bornes d'entrée.

Dans des variantes non illustrées, le transistor de puissance 34 à effet de champ (FETMOS) est remplacé par un transistor de puissance bipolaire à grille isolée (IGBT).

De nombreuses autres variantes sont possibles en fonction des circonstances, et on rappelle à cet égard que l'invention ne se limite pas aux exemples décrits et représentés.

## Revendications

1. Appareil de commande d'une charge (2) électrique alimentée en courant alternatif, comportant :
- un moyen de coupure (5) pour opérer sélectivement l'allumage et l'extinction de la charge (2),
- un dispositif électronique de commande (7) du moyen de coupure (5), et
- une unité (9 ; 9' ; 9") d'alimentation en courant continu du dispositif électronique de commande (7), présentant un condensateur réservoir d'énergie (40) et des moyens de pilotage de la charge dudit condensateur (40) adaptés à limiter la tension de charge du condensateur (40) en deçà d'un niveau plafond,
**caractérisé en ce que** les moyens de pilotage comportent, d'une part, un organe interrupteur (34) admettant un état conducteur pour permettre le passage d'un courant de charge du condensateur (40) et admettant un état bloqué pour interdire le passage du courant de charge du condensateur (40), et comportent, d'autre part, un moyen de blocage (46, 84, 92) pour commander l'état conducteur ou l'état bloqué dudit organe interrupteur, en fonction de la tension de charge dudit condensateur (40).

2. Appareil selon la revendication 1 **caractérisé en ce que** :
- l'organe interrupteur (34) est un transistor ayant un canal principal en série avec le circuit de charge du condensateur (40) ; et
- le moyen de blocage est un thyristor (46) dont l'anode est reliée à l'électrode de commande (48) de l'organe interrupteur (34) et la gâchette est portée à un potentiel représentatif de la tension de charge du condensateur (40).

3. Appareil selon la revendication 1 **caractérisé en ce que** :
- l'organe interrupteur (34) est un transistor ayant un canal principal en série avec le circuit de charge du condensateur (40) ; et
- le moyen de blocage est un thyristor (46) dont l'anode est reliée à l'électrode de commande (48) de l'organe interrupteur (34) et la gâchette est portée à un potentiel représentatif tant de la tension de charge du condensateur (40) que de la tension alternative appliquée à l'entrée de l'unité d'alimentation (9').

4. Appareil selon la revendication 1 **caractérisé en ce que** :
- l'organe interrupteur (34) est un transistor ayant un canal principal en série avec le circuit de charge du condensateur (40) ; et
- le moyen de blocage comporte deux transistors :
- un premier transistor (84) asservi à la tension de charge du condensateur (40), et
- un deuxième transistor (92) asservi à la tension alternative appliquée à l'entrée de l'unité d'alimentation (9").

5. Appareil selon la revendication 4, **caractérisé en ce que** le premier transistor (84) asservi à la tension de charge du condensateur (40) est un transistor bipolaire.

6. Appareil selon l'une quelconque des revendications 4 ou 5, **caractérisé en ce que** le deuxième transistor (92) asservi à la tension alternative appliquée à l'entrée de l'unité d'alimentation (9") est un transistor à effet de champ.

7. Appareil selon l'une quelconque des revendications précédentes, **caractérisé en ce que** l'organe interrupteur (34) est un transistor de puissance.

8. Appareil selon la revendication 7, **caractérisé en ce que** ledit organe interrupteur (34) est un transistor à effet de champ semi-conducteur oxyde métal (FETMOS).

9. Appareil selon la revendication 7, **caractérisé en ce que** ledit organe interrupteur est un transistor bipolaire à grille isolée (IGBT).
